# EUROPEAN PATENT SPECIFICATION

(11) **EP 2 196 330 B1**
(45) Date of publication and mention of the grant of the patent: **27.06.2012**
(21) Application number: 08777767.8
(22) Date of filing: 02.07.2008
(51) Int. Cl.: B60C 9/17, B60C 3/04, B60C 5/00, B60C 9/08, B60C 15/00

(54) **PNEUMATIC RADIAL TIRE**
RADIALLUFTREIFEN
PNEUMATIQUE RADIAL

(30) Priority: 31.08.2007 JP 2007226150
(43) Date of publication of application: 16.06.2010
(73) Proprietor: The Yokohama Rubber Co., Ltd., Minato-ku Tokyo 105-8685 (JP)
(72) Inventor: EBIKO, Masahiro, Hiratsuka-shi Kanagawa 254-8601 (JP)
(74) Representative: HOFFMANN EITLE
(86) International application number: PCT/JP2008/061964
(87) International publication number: WO 2009/028260

(56) References cited:
- EP-A2- 1 792 756
- WO-A1-2008/007555
- JP-A- 2000 343 908
- JP-A- 2004 042 755
- JP-A- 2007 111 944

## Description

### TECHNICAL FIELD

The present invention relates to a pneumatic radial tire, and more specifically relates to a pneumatic radial tire wherein a tire having a structure in which a lapel edge of a carcass is tucked under a belt layer and, exhibiting excellent durability and steering stability, can be produced easily without preparing an ultra-wide carcass material.

### BACKGROUND ART

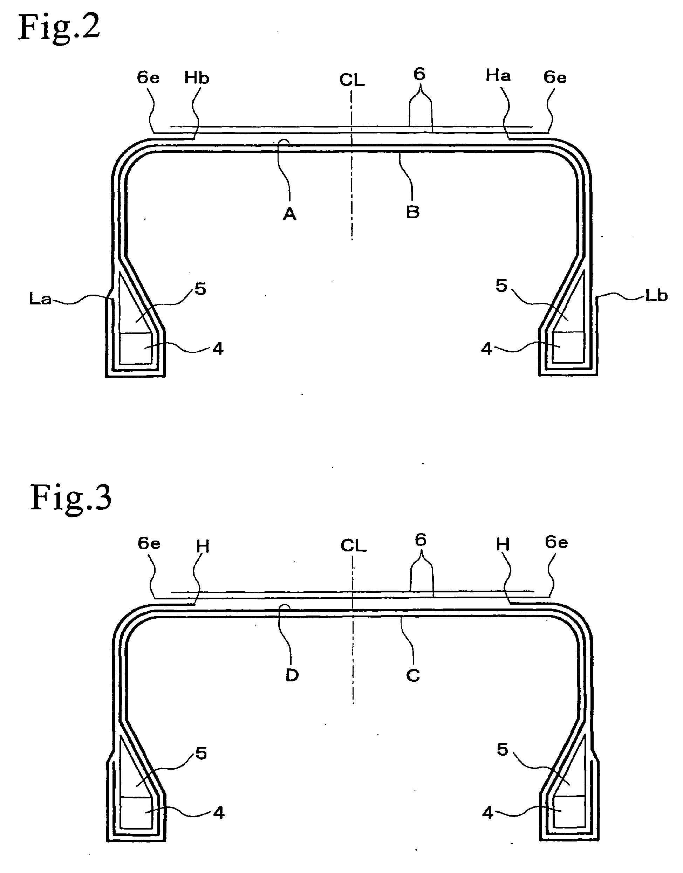

Recently, as a measure for improving the durability and steering stability of pneumatic radial tires, a carcass is made with a two layer structure having a wide carcass and a narrow carcass. Furthermore, as shown in FIG 3, both ends of a narrow carcass D are folded over from the inside of the tire to the outside, around a left and right pair of bead cores 4, 4 and, while the narrow carcass terminates near the bead core 4, both ends of a wide carcass C extend to the inside of the belt layer 6 of the tread portion, so as to be tucked under a belt layer 6. Such structures have come to be used as seen in Unexamined Japanese Patent Application Kokai Publication No. 2004-352174, for example.

However, if this tire structure is used in a tire with a large tire cross-section width or a pneumatic radial tire with a large tire cross-section height, the peripheral length of the inside of the tire will be extremely long, so there are no existing carcass materials with a size that can be applied to at least the aforementioned wide carcass, and therefore a special ultra-wide carcass material must be manufactured, and in order to handle this, special equipment must be prepared. In addition, carcass materials with two different dimensions must be produced and managed, so operations are more complicated and this leads to a problem of the manufacturability of the tire being dramatically reduced.

Further technological background information is disclosed in EP 1792756 A2 and JP 2004 042755 A.

### SUMMARY OF THE INVENTION

According to the present invention, there is provided a pneumatic radial tire comprising two layers of carcasses that extend from a tread portion to bead portions via left and right sidewall portions with both ends turned back around corresponding left and right bead cores from a tire inner side to an outer side, and a belt layer that is positioned on an outer circumferential side of the carcasses, wherein an overall width of the two layers of carcasses in a tire width direction is substantially equalized, characterized in that the carcasses are offset reversely in the tire width direction, and thereby turn back lengths from the left and right bead cores at the opposite ends of the carcasses are differentiated, and, of the two layers of carcasses on each side, the carcass with a shorter turn back length is terminated near the bead core, while the carcass with a longer turn back length is extended and terminated at the inner side in the tire width direction of an edge portion of the belt layer.

Furthermore, the length with the shorter turn back part and the length with the longer turn back part are preferably the same between the left and right tire side portions.

The length that the terminal end with the longer turn back length extends inward in the width direction of the tire from the belt layer end portion should be between 10% and 30% of the belt layer maximum width, and the linear distance from the terminal end with the shorter turn back length to the nearest bead toe should be between 20 and 40 mm.

If the tire is mounted on a vehicle with a negative camber, of the left and right tire side portions, the tire side portion where the carcass with the shorter turn back length is turned back to the outside of the carcass with the longer turn back length should be on the outside of the vehicle when mounted on the vehicle, and thereby the riding feel and the load durability can be harmonized. In this case, the thickness of the rubber from the terminal end of the shorter turn back length to the outer surface of the tire should be 2.0 mm or more.

Furthermore, the present invention can be applied to pneumatic radial tires where the nominal width of the tire cross section is 275 mm or more and/or the aspect ratio is 50% or less.

An advantage obtainable with embodiments of the present invention is to provide a pneumatic radial tire that has a structure in which the lapel edge of the carcass is tucked under a belt layer and exhibits high durability and steering stability can be produced easily using a carcass material of an existing size, without preparing an ultra-wide carcass material.

The pneumatic radial tire of the present invention has two layers of carcasses having an overall width substantially equalized in the tire width direction that are mutually offset in opposite directions in the width direction of the tire, such that the length that both ends of each carcass are turned back over the left and right bead cores are mutually different. With regard to these two carcass layers, the end of the carcass having the shorter turn back length is terminated near the bead core, while the end of carcass having the longer turn back length is extended to and terminated at the inside in the width direction of the tire of the belt layer edge portion. Therefore without using the two types of carcasses with different widths in the conventional way, simply by using carcass materials with the same size, an excellent pneumatic radial tire having a structure where the lapel edge of the carcass is tucked under a belt layer exhibiting excellent durability and steering ability can be easily made. Furthermore, special equipment for manufacturing ultra-wide carcass material is not required, so the aforementioned high-performance tire can be manufactured with high productivity.

### BRIEF DESCRIPTION OF THE DRAWINGS

To enable a better understanding of the present invention, and to show how the same may be carried into effect, reference will now be made, by way of example only, to the accompanying drawings, in which:-
FIG. 1 is a cross-sectional view in the meridian line direction of a pneumatic radial tire according to an embodiment of the present invention;
FIG. 2 is an explanatory diagram schematically showing the arrangement of the carcasses of the pneumatic radial tire of FIG. 1; and
FIG 3 is an explanatory diagram corresponding to FIG. 2 for a conventional pneumatic radial tire.

### DETAILED DESCRIPTION

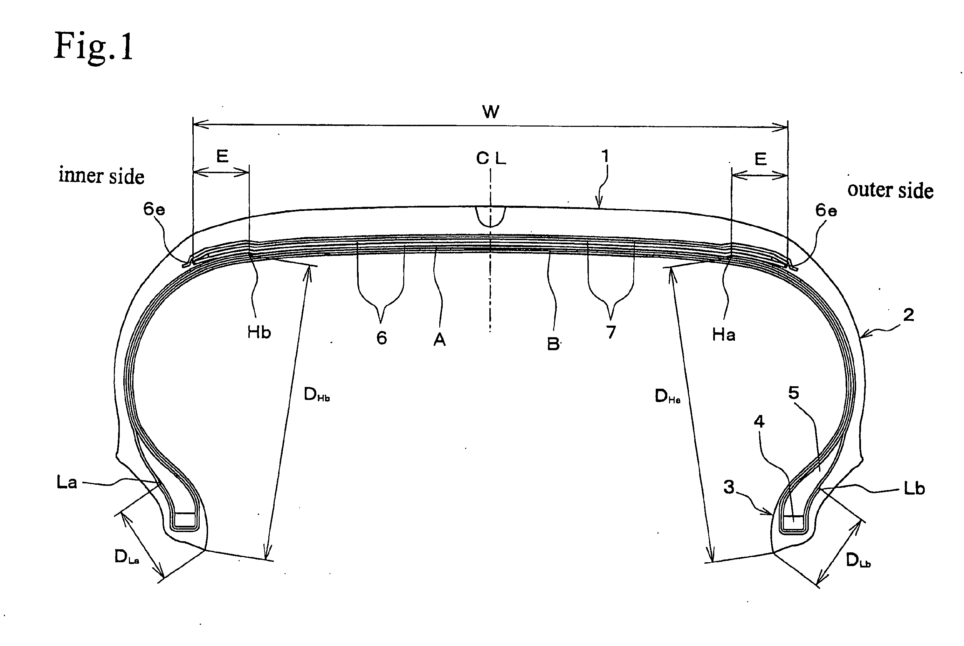

FIG. 1 is a cross-sectional view illustrating an example of an embodiment of the pneumatic radial tire of the present invention, and FIG. 2 is an explanatory diagram schematically illustrating the placement configuration of the carcasses in FIG. 1.

In FIGs. 1 and 2, the pneumatic radial tire contains a tread portion 1, left and right side wall portions 2, and bead portions 3. Two-layer construction carcasses A, B are extended from the tread portion 1 to bead portions 3, 3, via left and right side wall portions 2, 2, and attached to bead cores 4, 4. Two layers of steel cord belt layers 6 are provided in the outer circumferential side of the carcasses A, B of the tread portion 1 such that the cords cross between layers, and two belt cover layers 7 where reinforcement cord is wound in a spiral at a low angle of between 0° and 10° with regards to the circumferential direction of the tire are provided in the outer circumferential side of the belt layers.

The overall width of the two carcasses A, B in the tire width direction is substantially equalized and the carcasses A, B are offset reversely in the tire width direction. Both end portions of the two offset carcass layers A, B are turned back from the left and right bead cores 4, 4, such that the left and right turn back lengths are mutually different.

In other words, of the two inner and outer carcass layers A, B, the outer carcass layer A has a turn back end La on the left side of the drawing that is terminated at the side portion of the bead filler 5 near the bead core 4, while the turn back end Ha on the right side is terminated so as to extend from the end portion 6e of the belt layer 6, via the sidewall portion 2, to the inner side in the width direction of the tire. In contrast, the inner carcass layer B has a turn back end Lb on the right side of the drawing that is terminated at the side portion of the bead filler 5 near the bead core 4, while the turn back end Hb on the left side is terminated so as to extend from the end portion 6e of the belt layer 6 to the inner side in the width direction of the tire. Thereby forming a left and right nonsymmetric structure where on the left side of the drawing, the long turn back portion of carcass B covers the short turn back end La of carcass A, while on the right side of the drawing, the short turn back end Lb of carcass B overlays the outer side of the long turn back portion of carcass A.

In this manner, the two carcass layers A, B with substantially equal length of carcass width are used, but because the carcasses are positioned offset in mutually opposite directions, a pneumatic radial tire with high durability and steering stability having a construction where the turn back end of the carcasses are tucked under a belt layer can be obtained without using two different types of carcass material with different widths. Therefore, when manufacturing tires with a large tire cross-sectional width or tires with a large tire cross-sectional height, carcass material of a currently existing size can be used without modification, and specially preparing ultra-wide carcass material is not required. Therefore, preparing special equipment for manufacturing especially wide carcass material is not necessary, and manufacturing and controlling two different dimensions of carcass material will not be required during tire production, so the number of carcass racks and servicer steps can be reduced during molding and operations will be simplified, and therefore a high-performance tire can be manufactured with high productivity.

As shown in the examples illustrated in FIGs. 1 and 2, the pneumatic radial tire of the present invention preferably has a construction such that of the two layers of carcasses, the length of the carcass with the shorter turn back length and the length of the carcass with the longer turn back length are mutually equal between the left and right tire side portions. In FIG. 1, the linear distance D_{Hb} between the longer turn back end Hb on the left side and the nearest bead toe is the same as the linear distance D_{Ha} between the longer turn back end Ha on the right side and the nearest bead toe, and the linear distance D_{La} between the shorter turn back end La on the left side and the nearest bead toe is the same as the linear distance D_{Lb} between the shorter turn back end Lb on the right side and the nearest bead toe.

In this manner, between the left and right tire side portions, both linear lengths D_{La} and D_{Lb} of the carcass with the shorter turn back length, and both linear lengths D_{Ha} and D_{Hb} of the carcass with the longer turn back length are set to be the same length, and therefore the tire uniformity is enhanced, excellent moving balance can be achieved, and the vibration while driving can be reduced. The positional configuration of the carcasses A, B can be adjusted by making the offset amount in the width direction of carcass A with regards to the tire center line CL essentially equal to the offset amount of carcass B in the opposite direction.

Of the turn back ends of the two carcass layers, the length E (tuck length) where the left and right longer turn back ends Ha, Hb extend from the corresponding belt layer end portion 6e to the inner side in the width direction of the tire should be between 10% and 30% of the maximum width W of the belt layer 6. If the length E is less than 10% of the maximum width W of the belt layer, the tucking the turn back ends Ha and Hb under the belt layer 6 will be insufficient, and sufficient tire durability and steering stability can not be obtained. Furthermore, if in excess of 30% of the maximum width W of the belt layer, the effect of improving the durability and steering stability will plateau, yet the operation of turning back the carcass ends during tire molding will be difficult so productivity will be reduced.

The linear distances D_{La} and D_{Lb} between the left and right shorter turn back ends La and Lb and the nearest bead toe should be between 20 and 40 mm. If the linear distances D_{La} and D_{Lb} are less than 20 mm, the carcass can easily be separated from the bead core, thus causing tire failure. Furthermore, if the linear distance is greater than 40 mm, the turn back ends La and Lb will enter the flex zone where the repetitive deformation is large, so the stress will be concentrated in the end portions, and durability will decrease.

The aforementioned pneumatic radial tire of the present invention has a left and right nonsymmetric construction in the left and right tire side portions, with the shorter turn back ends of the two layers of carcasses being covered with the longer turn back portions in one tire side portion, and conversely the shorter turn back ends being overlapped on the longer turn back portion in the other tire side portion. When this left and right nonsymmetric construction pneumatic radial tire is mounted on a vehicle, either side of the tire side portions can be on the vehicle inner side or the vehicle outer side, without restrictions in particular.

However, mounting the tire of the present invention on a vehicle that is set to have a negative camber is preferably performed such that the tire side portion of the side where the turn back end of the carcass with the shorter turn back length Lb is turned back to the outer side of the longer turn back portion is positioned to the outside of the vehicle when mounted on the vehicle, as shown in the example in FIG. 1. In the tire side portion on the outside of the vehicle, the shorter turn back end Lb is not covered with the longer turn back portion, so the tire rigidity will be lower and the riding feel will be improved. At the same time, on the vehicle inner side, high contact pressure is received because of the negative camber, but the shorter turn back end La is covered with the longer turn back portion, so the tire rigidity is increased and favorable loading resistance can be maintained.

In this way, in the vehicle outer side, the rubber thickness from the shorter turn back end Lb to the tire outer surface should be 2.0 mm or larger on the tire side portion where the shorter turn back end Lb of the carcass is not covered with the longer turn back portion. If the rubber thickness of the outer side of the turn back end Lb is less than 2.0 mm, maintaining durability will be difficult.

The tire of the present invention can be applied regardless of the tire size, but is particularly suitable for use with pneumatic radial tires where the tire cross-section nominal width is 275 mm or higher and/or the aspect ratio is 50% or less. A tire with this tire size will have a periphery length on the inside of the tire that is extremely long, so by applying the tire construction of the present invention, a high-performance tire with high durability and steering stability can be manufactured with high productivity while using carcass material where the carcass width is of an existing size. With the present invention, the nominal width and the aspect ratio of the tire cross-section are determined based on the provisions of JATMA.

The present invention is further described using embodiments, but the present invention is not restricted to these embodiments.

### EMBODIMENTS

### Embodiments 1 through 3

When manufacturing an ultra-flat radial tire with a tire construction as shown in FIG 1 and with a tire size of 305/45R22, three types of pneumatic radial tires (tires 1 through 3 of the present invention) were fabricated under the similar conditions such that two carcass layers with the same length for the total width in the tire width direction were positioned to be offset in mutually opposite directions with regards to the width direction of the tire, while varying the carcass width of the carcass material, the linear distances D_{La}, D_{Lb}, D_{Ha} and D_{Hb} of both sides of the turn back ends of each carcass and the nearest bead toe and the ratio (%) of the distance E between the turn back ends Ha, Hb and the belt layer end portion 6e with regards to the maximum width W of the belt layer, as shown in Table 1. Furthermore, as comparative example 1, a pneumatic radial tire (comparative example tire 1) was fabricated in a manner similar to embodiment 1, except that with the tire construction illustrated in FIG 3, two carcass layers with different carcass widths as shown in Table 1 were positioned with left and right symmetry.

With regards to the four types of pneumatic radial tires obtained, the tires of the present invention were mounted on a vehicle with a negative camber such that the tire side where the carcass shorter turn back end Lb is located was on the vehicle outer side, and then the load durability, steering stability, and riding feel were evaluated by the following methods, and the results are shown in Table 1.

### Load durability

The pneumatic radial tires obtained were assembled onto 22 × 11.0 J rims, and then preliminary driving was performed for 2 hours using a drum tester with a diameter of 1707 mm, at conditions of an ambient temperature controlled to 25°C plus or minus 3°C, a camber angle of plus or minus 3° (where minus represents a negative camber), a slip angle of 0°, air pressure of 330 kPa, loading at the maximum load designated by JATMA Y/B, and a speed of 81 km/h. The distance traveled until tire failure was then measured under the same conditions as the preliminary driving except that the loading was 151% of the aforementioned maximum load. The evaluation results are shown as an index with comparative example 1 being 100, where larger index values indicate superior durability.

### Driving Stability

The pneumatic radial tires obtained were assembled onto 22 × 11.0 J rims and mounted in the determined mounting direction onto a domestic vehicle with a displacement of 4.7 L, and the air pressure was set to 240 kPa. The driving stability during forward driving and during lane changes was then evaluated by function using trained test drivers. The evaluation results are shown as an index with comparative example 1 being 100, where larger index values indicate superior driving stability.

### Riding Feel

The pneumatic radial tires obtained were assembled onto 22 × 11.0 J rims and mounted in the determined mounting direction onto a domestic vehicle with a displacement of 4.7 L, and the air pressure was set to 240 kPa. The vehicle was driven at 50 km/h on an uneven test course, and a sensory evaluation was made by a panel of three specialists. The evaluation results are shown as an index with comparative example 1 being 100, where larger index values indicate superior riding feel.

**Table 1**

| | | Embodiment 1 | Embodiment 2 | Embodiment 3 | Comparative example 1 |
|---|---|---|---|---|---|
| Tire Structure | | Present Invention Tire 1 | Present Invention Tire 2 | Present Invention Tire 3 | Comparative Example Tire 1 |
| Carcass Structure | | Nonsymmetric | Nonsymmetric | Nonsymmetric | Symmetric |
| Inside Carcass Width (mm) | | 700 | 680 | 740 | 800 |
| Outside Carcass Width (mm) | | 700 | 680 | 740 | 600 |
| Vehicle Outer Side | Distance D_{Lb} (mm) | 20 | 20 | 30 | 20 |
| | Distance D_{Ha} (mm) | 120 | 110 | 130 | 120 |
| | Distance E (%) | 20 | 10 | 30 | 20 |
| Vehicle Inner Side | Distance D_{La} (mm) | 20 | 20 | 30 | 20 |
| | Distance D_{Hb} (mm) | 120 | 110 | 130 | 120 |
| | Distance E (%) | 20 | 10 | 30 | 20 |
| Load Durability Index | | 100 | 100 | 100 | 100 |
| Steering Stability Index | | 100 | 100 | 100 | 100 |
| Riding Feel Index | | 122 | 128 | 117 | 100 |

### Embodiments 4 through 6

The tires 1 through 3 of the present invention obtained in embodiments 1 through 3 were mounted on a vehicle with negative camber, except that the vehicle inner and outer positions were inverted, and then the load durability, steering stability, and riding feel were evaluated in the same manner as embodiments 1 through 3. The results are shown in Table 2.

**Table 2**

| | | Embodiment 4 | Embodiment 5 | Embodiment 6 | Comparative Example 1 |
|---|---|---|---|---|---|
| Tire Structure | | Present Invention Tire 1 | Present Invention Tire 2 | Present Invention Tire 3 | Comparative Example Tire 1 |
| Carcass Structure | | Nonsymmetric | Nonsymmetric | Nonsymmetric | Symmetric |
| Inside Carcass Width (mm) | | 700 | 680 | 740 | 800 |
| Outside Carcass Width (mm) | | 700 | 680 | 740 | 600 |
| Vehicle Outer Side | Distance D_{La} (mm) | 20 | 20 | 30 | 20 |
| | Distance D_{Hb} (mm) | 120 | 110 | 130 | 120 |
| | Distance E (%) | 20 | 10 | 30 | 20 |
| Vehicle Inner Side | Distance D_{Lb} (mm) | 20 | 20 | 30 | 20 |
| | Distance D_{Ha} (mm) | 120 | 110 | 130 | 120 |
| | Distance E (%) | 20 | 10 | 30 | 20 |
| Load Durability Index | | 100 | 100 | 100 | 100 |
| Steering Stability Index | | 100 | 100 | 100 | 100 |
| Riding Feel Index | | 100 | 100 | 100 | 100 |

## Claims

1. A pneumatic radial tire comprising two layers of carcasses (A, B) that extend from a tread portion (1) to bead portions (3, 3) via left and right sidewall portions (2, 2), with both ends turned back around corresponding left and right bead cores (4, 4) from a tire inner side to an outer side, and a belt layer (6) that is positioned on an outer circumferential side of the carcasses (A, B), wherein
an overall width of the two layers of carcasses (A, B) in a tire width direction is substantially equalized, **characterized in that** the carcasses (A, B) are offset reversely in the tire width direction, and thereby turn back lengths from the left and right bead cores (4, 4) at the opposite ends of the carcasses (A, B) are differentiated, and, of the two layers of carcasses on each side, the carcass with a shorter turn back length is terminated (La, Lb) near the bead core (4), while the carcass with a longer turn back length is extended and terminated (Ha, Hb) at the inner side in the tire width direction of an edge portion (6e, 6e) of the belt layer (6).

2. The pneumatic radial tire according to claim 1, wherein, between a left and a right side portion, a length of the carcass (A, B) with the shorter turn back length and a length of the carcass (B, A) with the longer turn back length are mutually equal.

3. The pneumatic radial tire according to claim 1 or 2, wherein a length that a terminal end (Ha, Hb) of the carcass with the longer turn back length extends from the belt layer end portion (6e) to the inner side in the width direction of the tire is between 10% and 30% of a maximum width of the belt layer (6).

4. The pneumatic radial tire according to claims 1, 2, or 3, wherein a linear distance (D_{La}, D_{Lb}) from a terminal end (La, Lb) of the carcass with the shorter turn back length to a nearest bead toe is between 20 and 40 mm.

5. The pneumatic radial tire according to any one of claims 1 through 4, wherein, of the left and right tire side portions, the tire side portion where the carcass (A, B) with the shorter turn back length is turned back to the outside of the carcass with the longer turn back length is on a vehicle outer side when mounted on a vehicle.

6. The pneumatic radial tire according to claim 5, wherein a rubber thickness, from the terminal end (Lb) of the carcass (B) with a shorter turn back length and that is on the outside of the carcass (A) with the longer turn back length to the outer surface of the tire, is 2.0 mm or more.

7. The pneumatic radial tire according to any one of claims 1 through 6, wherein a nominal width of the tire cross section is 275 mm or more.

8. The pneumatic radial tire according to any one of claims 1 through 7, wherein the radial tire is a flattened tire having an aspect ratio of 50% or less.

## Patentansprüche

1. Radialer Luftreifen mit zwei Karkassenschichten (A, B), die sich von einem Laufflächenabschnitt (1) zu Wulstabschnitten (3, 3) über linke und rechte Seitenwandabschnitte (2, 2) erstrecken, wobei beide Enden um jeweilige linke und rechte Wulstkerne (4, 4) von einer inneren Reifenseite zu einer äußeren Reifenseite herumgeschlagen sind, und mit einer Gürtelschicht (6), die an einer äußeren Umfangsseite der Karkassen (A, B) positioniert ist,
wobei eine Gesamtbreite der zwei Karkassenschichten (A, B) in einer Reifenbreitenrichtung im Wesentlichen gleich ist, **dadurch gekennzeichnet, dass** die Karkassen (A, B) in der Reifenbreitenrichtung umgekehrt versetzt sind und **dadurch** Herumschlagelängen von den linken und rechten Wulstkernen (4, 4) an den entgegengesetzten Enden der Karkassen (A, B) verschieden sind und, von den zwei Karkassenschichten an jeder Seite, die Karkasse mit einer kürzeren Herumschlagelänge (La, Lb) in der Nähe des Wulstkerns (4) endet während die Karkasse mit einer längeren Herumschlagelänge verlängert ist und (Ha, Hb) an der in der Reifenbreitenrichtung inneren Seite eines Kantenabschnitts (6e, 6e) der Gürtelschicht (6) endet.

2. Radialer Luftreifen nach Anspruch 1, bei dem zwischen einem linken und einem rechten Seitenabschnitt eine Länge der Karkasse (A, B) mit der kürzeren Herumschlagelänge und eine Länge der Karkasse (B, A) mit der längeren Herumschlagelänge wechselseitig gleich sind.

3. Radialer Luftreifen nach Anspruch 1 oder 2, bei dem eine Länge, bis zu der sich ein Abschlussende (Ha, Hb) der Karkasse mit der längeren Herumschlagelänge von dem Gürtelschicht-Endabschnitt (6e) zu der inneren Seite in der Breitenrichtung des Reifens erstreckt, zwischen 10% und 30% einer maximalen Breite der Gürtelschicht (6) liegt.

4. Radialer Luftreifen nach Anspruch 1, 2 oder 3, bei dem ein linearer Abstand (D_{La}, D_{Lb}) von einem Abschlussende (La, Lb) der Karkasse mit der kürzeren Herumschlaglänge bis zu einem nächsen Wulstfuß zwischen 20 und 40 mm liegt.

5. Radialer Luftreifen nach einem der Ansprüche 1 bis 4, bei dem von den linken und rechten Reifenseitenabschnitten der Reifenseitenabschnitt, an dem die Karkasse (A, B) mit der kürzeren Herumschlagelänge auf die Außenseite der Karkasse mit der längeren Herumschlagelänge herumgeschlagen ist, auf einer äußeren Fahrzeugseite ist, wenn an einem Fahrzeug angebracht.

6. Radialer Luftreifen nach Anspruch 5, bei dem eine Gummidicke von dem Abschlussende (Lb) der Karkasse (B) mit einer kürzeren Herumschlagelänge und die an der Außenseite der Karkasse (A) mit der längeren Herumschlagelänge ist zu der äußeren Oberfläche des Reifens 2 mm oder mehr ist.

7. Radialer Luftreifen nach einem der Ansprüche 1 bis 6, bei dem eine Sollbreite des Reifenquerschnitts 275 mm oder mehr ist.

8. Radialer Luftreifen nach einem der Ansprüche 1 bis 7, bei dem der radiale Reifen ein abgeflachter Reifen mit einem Größenverhältnis von 50% oder weniger ist.

## Revendications

1. Bandage pneumatique radial comprenant deux couches de carcasse (A, B) qui s'étendent d'une portion de bande de roulement (1) à des portions de talon (3, 3) par des portions de paroi latérale gauche et droite (2, 2), les deux extrémités étant tournées vers l'arrière autour de tringles gauche et droite correspondantes (4, 4) depuis un côté intérieur du bandage vers un côté extérieur, et une couche de ceinture (6) qui est positionnée sur un côté circonférentiel externe des carcasses (A, B), où une largeur d'ensemble des deux couches de carcasse (A, B) dans le sens de la largeur du bandage est sensiblement égalisée,
**caractérisé en ce que**
les carcasses (A, B) sont décalées inversement dans le sens de la largeur du bandage, et de ce fait les longueurs retournées des tringles gauche et droite (4, 4) aux extrémités opposées des carcasses (A, B) sont différentiées et, parmi les deux couches de carcasse de chaque côté, la carcasse avec une longueur retournée plus courte se termine (La, Lb) près de la tringle (4), tandis que la carcasse avec une longueur retournée plus longue s'étend et se termine (Ha, Hb) au côté intérieur dans le sens de la largeur du bandage d'une portion de bord (6e, 6e) de la couche de ceinture (6).

2. Bandage pneumatique radial selon la revendication 1, dans lequel, entre une portion côté gauche et côté droit, une longueur de la carcasse (A, B) avec la longueur de retour plus courte et une longueur de la carcasse (B, A) avec la longueur de retour plus longue sont mutuellement égales.

3. Bandage pneumatique radial selon la revendication 1 ou 2, dans lequel une longueur selon laquelle une extrémité terminale (Ha, Hb) de la carcasse avec la longueur de retour plus longue s'étend depuis la portion d'extrémité de la couche de ceinture (6e) au côté intérieur dans le sens de la largeur du bandage est entre 10% et 30% d'une largeur maximum de la couche de ceinture (6).

4. Bandage pneumatique radial selon les revendications 1, 2 ou 3, dans lequel une distance linéaire (D_{La}, D_{Lb}) depuis l'extrémité terminale (La, Lb) de la carcasse avec la longueur de retour plus courte à la pointe du bourrelet la plus proche est entre 20 et 40 mm.

5. Bandage pneumatique radial selon l'une quelconque des revendications 1 à 4, dans lequel, parmi les portions latérales de bandage gauche et droite, la portion latérale de bandage ou la carcasse (A, B) avec la longueur de retour plus courte est retournée vers l'extérieur de la carcasse, la longueur de retour plus longue se situant sur un côté extérieur du véhicule lorsqu'elle est montée sur un véhicule.

6. Bandage pneumatique radial selon la revendication ₅, dans lequel une épaisseur du caoutchouc, de l'extrémité terminale (Lb) de la carcasse (B) avec une longueur de retour plus courte et qui est sur l'extérieur de la carcasse (A) avec la longueur de retour plus longue à la surface extérieure du bandage est de 2,0 mm ou plus.

7. Bandage pneumatique radial selon l'une quelconque des revendications 1 à 6, dans lequel une largeur nominale de la section transversale du bandage est de 275 mm ou plus.

8. Bandage pneumatique radial selon l'une quelconque des revendications 1 à 7, dans lequel le bandage radial est un bandage aplati ayant un rapport d'aspect de 50% ou moins.
